# EUROPÄISCHE PATENTSCHRIFT

(11) **EP 1 501 624 B1**
(45) Veröffentlichungstag und Bekanntmachung des Hinweises auf die Patenterteilung: **14.12.2005**
(21) Anmeldenummer: 03747123.2
(22) Anmeldetag: 25.04.2003
(51) Int. Cl.: B01D 61/24, B01D 11/04

(54) **VERFAHREN ZUR BESCHLEUNIGTEN DIALYTISCHEN RÜCKGEWINNUNG VON FREMDSUBSTANZEN AUS PASSIVSAMMLERN, DIE AUS SEMIPERMEABLEN MEMBRANEN UNTERSCHIEDLICHER LÄNGE UND AUSMASSE BESTEHEN**
METHOD FOR THE ACCELERATED DIALYTIC RECOVERY OF FOREIGN SUBSTANCES FROM PASSIVE COLLECTORS CONSISTING OF SEMI-PERMEABLE MEMBRANES HAVING DIFFERENT DIMENSIONS
PROCEDE DE RECUPERATION, PAR DIALYSE ACCELEREE, DE SUBSTANCES ETRANGERES CONTENUES DANS DES COLLECTEURS PASSIFS CONSTITUES DE MEMBRANES SEMI-PERMEABLES DE DIMENSIONS DIFFERENTES

(30) Priorität: 26.04.2002 DE 10219554
(43) Veröffentlichungstag der Anmeldung: 02.02.2005
(73) Patentinhaber: UFZ-UMWELTFORSCHUNGSZENTRUM Leipzig-Halle GmbH, 04318 Leipzig (DE)
(72) Erfinder: WENZEL, Klaus-Dieter, 04425 Taucha (DE); VRANA, Branislav, 04107 Leipzig (DE); HUBERT, Andreas, 04317 Leipzig (DE); MOTHES, Brigitta, 04277 Leipzig (DE); HEINRICH, Marion, 04329 Leipzig (DE); SCHÜÜRMANN, Gerrit, 04683 Threna (DE)
(74) Vertreter: Rasch, Dorit
(86) Internationale Anmeldenummer: PCT/EP2003/004320
(87) Internationale Veröffentlichungsnummer: WO 2003/090909

(56) Entgegenhaltungen:
- US-A- 4 269 804
- US-A- 5 098 573
- US-A- 5 395 426
- SCHLUSENER M P ET AL: "Determination of antibiotics from soil by pressurized liquid extraction and liquid chromatography-tandem mass spectrometry" , JOURNAL OF CHROMATOGRAPHY A, ELSEVIER SCIENCE, NL, VOL. 1003, NR. 1-2, PAGE(S) 21-28 XP004436941 ISSN: 0021-9673 Seite 23, Absatz 2.5 Seite 27, Absatz 4.

## Beschreibung

Die Erfindung betrifft ein Dialyseverfahren zur Rückgewinnung von Fremdsubstanzen, insbesondere von niedermolekularen anorganischen und/oder organischen Substanzen, aus Passivsammlern unter Verwendung einer Druck-unterstützten Flüssig-Extraktionsapparatur (PLE = Pressurized Liquid Extraction). Die Passivsammler bestehen aus semipermeablen Membranen unterschiedlicher Länge und Ausmaße. Das Dialyseverfahren dient insbesondere zum spurenanalytischen Nachweis von organischen mittel- bis schwerflüchtigen Schadstoffen, z.B. von Organochlorpestiziden, polychlorierten Biphenylen und anderen Chlororganika sowie von polyzyklischen aromatischen Kohlenwasserstoffen (PAKs). Bevorzugt handelt es sich bei den Membranen um Semipermeable Membrane Devices (SPMDs), die als Passivsammler die Fremdstoffe/Schadstoffe an einem Ab- oder Adsorptionsmittel akkumulieren. Alternativ können die zu dialysierenden Schadstoffe auch aus Sediment, Boden, Altlasten, pflanzlichen oder anderen Matrices stammen, welche in semipermeablen Membranen plaziert werden, wobei kein Ab-/Adsorptionsmittel benötigt wird. Das Dialyseverfahren unter Verwendung einer PLE-Apparatur ist sehr effektiv und beschleunigt die Dialyse der Schadstoffe aus semipermeablen Membranen ganz wesentlich.

SPMDs werden bevorzugt in der Umweltüberwachung als innovative Passivsammler-Technik für die Erfassung und Bewertung von Spurenkonzentrationen mittel-bis schwerflüchtiger organischer Schadstoffe (SVOCs) eingesetzt. Die Passivsammler stellen eine sinnvolle Alternative zu den bekannten jedoch aufwendigen Aktivsammlern dar. Sie ermöglichen die Bestimmung von zeitlich gewichteten, durchschnittlichen (time-weighted average - TWA) Konzentrationen über größere Zeiträume. Des weiteren sind die Kosten für die Sammelausrüstungen im Vergleich zu Aktivsammlern wesentlich niedriger, und es ist kein Stromanschluß erforderlich. Passivsammler werden im größeren Umfang zum Monitoring der Arbeitsplatzatmosphäre genutzt, wobei es dabei vorzugsweise um die Erfassung von flüchtigen organischen Schadstoffen in der Umgebungsluft geht. Die Verwendung der Passivsammler für die Luftüberwachung im Freiland ist jedoch relativ neu. Vor kurzem publizierte Brown [Brown, R.H. (2000): Monitoring the ambient environment with diffusive samplers: theory and practical considerations. Journal of Environmental Monitoring 2, 1-9.] eine erste Übersichtsarbeit über das Potential diffuser Sammler zur Überwachung der Luftqualität im Freiland.

Zur Thematik Nutzung von Passivsammeltechniken für die Erfassung von mittel- bis schwerflüchtigen organischen Schadstoffen in der Umgebungsluft wurde erst in den letzten Jahren in geringem Umfang publiziert. Unter den getesteten Passivsammlern befinden sich mit Wachs beschichtete Papierfilter, mit Fett beschichtete Glasplatten oder Glasfaserfilter, mit stationärer GC-Phase beschichtete Glasplatten und Textilien. Um innerhalb einer praktikablen Meßzeit eine ausreichende Schadstoffmenge aus der Atmosphäre anzureichern, hat man generell Passivsammler mit einem großen Verhältnis Oberfläche zu Volumen konstruiert, in der angelsächsischen Literatur "badge-type" genannt. Diese Sammler stellen ein potentielles Instrument dar, um gasförmige Schadstoffe aus der Luft zu akkumulieren und ihre Luftkonzentration abzuschätzen. Bei "badge-type" Konfiguration besteht jedoch ein potentielles Risiko der Abhängigkeit der Anreicherungskinetik von der Windgeschwindigkeit, wenn das Sammelmedium im direkten Kontakt zur Atmosphäre steht.

Die SPMDs gehören in der Umweltüberwachung zu den integrativen Passivsammlern von atmosphärischen und Wasserschadstoffen. Handelsübliche SPMDs bestehen aus einer schlauchförmigen Polyethylen-Membran geringer Dicke (75-90 *µ*m), die einen dünnen Film des neutralen synthetischen lipophilen Fettsäureesters Triolein (hohes Molekulargewicht von > 600 Da) im Innern enthält. Lipophile chemische Substanzen, wie z. B. die Organochlor- verbindungen HCH-Isomere, polychlorierte Biphenyle, Chlorbenzole, *p*,*p*' -DDT und seine Abbauprodukte *p*,*p*'-DDE und *p*,*p*'-DDD sowie auch PAKs, können durch diese semipermeable Membran diffundieren und werden dort in einem lipiden Fettsäureester, dem Triglycerid Triolein akkumuliert bzw. konzentriert. Das gewährleistet den Nachweis umweltrelevanter Schadstoffanalyte im Spurenbereich. Die SPMD-Technologie (US-Patent 5,098,573 A) ermöglicht dadurch die Bestimmung von zeitlich gemittelten Konzentrationen der sowohl im Wasserkörper gelösten als auch in der Atmosphäre gasförmig transportierten persistenten organischen Verbindungen.

Das von Huckins et al. [Huckins, J.N.; Manuweera, G.K.; Petty, J.D.; Mackay, D.; Lebo, J.A. (1993): Lipid-containing semipermeable membrane devices for monitoring organic contaminants in water. Environ. Sci. Technol. 27, 2489-2496.] eingeführte Verfahren wurde anfänglich entwickelt, um Belastungen von aquatischen Systemen mit lipophilen organischen Schadstoffen anzuzeigen. Später ist die Anwendbarkeit der SPMDs auch für die Luftüberwachung von gasförmigen Rückständen wie PCBs, organochlorierten Pestiziden und polyzyklischen aromatischen Kohlenwasserstoffen gezeigt worden.

Nachteilig bei der Anwendung dieser SPMD-Technik ist eine pro Standard-SPMD-Schlauch (Länge: 91 cm) zeitintensive Probenaufarbeitung (ca. 48 h) mit verhältnismäßig hohem Verbrauch an Lösemitteln (520 ml) bei einer dialytischen Rückgewinnung von an Triolein akkumulierten organischen Substanzen (US-Patent 5,395,426 A). Jeder SPMD-Schlauch wird bisher entsprechend dem wissenschaftlichen Stand zunächst für 24h in 260 ml n-Hexan als Lösemittel dialysiert. Danach wird das Lösemittel erneuert und die Probe für weitere 24 h dialysiert [Huckins, J. N.; Tubergen, M.W.; Lebo, J. A.; Gale, R.W.; Schwartz, T.R. (1990). A new approach for the cleanup of organic contaminants: Polymeric film dialysis in organic solvent media. J. Assoc. Off. Anal. Chem. 73:290-293.]. Im aufkonzentrierten Endextrakt sind jedoch noch etwa 4-5% an mitextrahiertem Triolein enthalten. Eine nachfolgende Reinigung des Extraktes findet durch Silica-Chromatographie mit sich anschließender Ausschlußchromatographie zur Abtrennung der die Analyse störenden Trioleinreste statt. Eine gleichzeitige Aufarbeitung mehrerer Proben bedeutet neben der Blockierung einer größeren Arbeitsfläche im Labor einen hohen zeit- und arbeitsintensiven Aufwand. Darüber hinaus ist der verhältnismäßig hohe Laborpreis für das 91 cm lange Standard-SPMD der Firma EST, Inc., USA (Environmental Sampling Technologies), die gegenwärtig Alleinproduzent ist, von z.Z. etwa 50 bis 60 ∉ pro Stück für systematische Untersuchungen hinderlich, da hierfür eine größere Stückzahl benötigt wird. Der Einsatz von bereits 10 solcher SPMDs würde einen hohen finanziellen Aufwand von etwa 500-600 ∉ bedeuten.

Der Erfindung lag deshalb die Aufgabe zugrunde, ein kostengünstiges, effektives und routinemäßig einsetzbares Verfahren zu entwickeln, das die dialytische Rückgewinnung von Fremdstoffen, wie z.B. niedermolekularen anorganischen und/oder organischen Schadstoffen aus der Umweltüberwachung, aus semipermeablen Membranen vereinfacht und deutlich verkürzt.

Die Erfindung wird gemäß den Ansprüchen realisiert. Überraschend können Fremdstoffe bzw. Schadstoffe aus Passivsammlern, die aus semipermeablen Membranen unterschiedlicher Länge und Ausmaße bestehen, unter Verwendung einer Druck-unterstützten Flüssig-Extraktionsapparatur wesentlich beschleunigt dialytisch rückgewonnen werden. Dazu wird die fremdstoffbeladene zu dialysierende semipermeable Membran in einer netzartigen Maske aus inerten Materialien innerhalb einer Extraktionskartusche der PLE-Apparatur fixiert. Die Dialyse wird unter Optimierung der Operationsvariablen Lösemittel, Druck, Temperatur und Anzahl zeitabhängiger Extraktionsschritte der PLE-Apparatur mit einem organischen Lösungsmittel oder Lösungsmittelgemisch durchgeführt.

So genannte semipermeable Passivsammler im Sinne der Erfidung sind im Prinzip alle aus dem Stand der Technik bekannten Systeme, die aus semipermeablen Membranen unterschiedlicher Länge und Ausmaße bestehen. In einer bevorzugten Ausführungsvariante sind sie schlauchförmig. Aber auch andere Formen, wie z.B. taschen- oder beutelförmige Ausführungsformen sind im Prinzip einsetzbar. Unter semipermeablen Passivsammlern werden auch solche Materialien verstanden, die Fremd- oder Schadstoffe enthalten und in semipermeable Membranen unterschiedlicher Länge und Ausmaße eingebettet werden.

Mit der vorliegenden Erfindung wird erstmalig ein speziell für die Extraktion von Schadstoffen aus Umweltmatrices und anderen Matrices konstruiertes modernes Extraktionsgerät der Durchführung einer Dialyse zugänglich gemacht. Um ein Anheften des bevorzugt schlauchförmigen Passivsammlers an der Innenwand der Kartusche zu vermeiden, was zur Behinderung einer effizienten Dialyse führen würde, wird die semipermeable Membran innerhalb der netzartigen Maske aus inerten Materialien in die Extraktionskartusche eingebracht.

Die Vorteile des Verfahrens liegen neben einer verbesserten methodischen Standardisierung in einer enormen Verkürzung des bisherigen konventionellen Dialyse-Verfahrens von 48 h auf eine statische Dialysezeit, die < 2h ist, in der Regel vorzugsweise ca. 40 min. Die Gebrauchsfähigkeit von semipermeablen Membranen unterschiedlicher Längen und Ausmaße führt zu einer deutlichen Senkung des Lösemittelverbrauchs und zu einer Einsparung an Materialkosten, da auch kürzere als die z.Z. handelsüblichen 91 cm langen SPMDs effektiv eingesetzt und dialysiert werden können.

Die Wiederfindungsraten des erfindungsgemäßen Verfahrens entsprechen denen, die mit dem bisher angewandten konventionellen Dialyseverfahren erreicht wurden. Speziell für die Gruppe der HCHs wurde sogar eine deutliche Steigerung der Wiederfindungsrate von 80% auf 90% erreicht. Diese Verbesserungen ermöglichen den Routineeinsatz des erfindungsgemäßen Verfahrens,

Die Methode der Pressurized Liquid Extraction (PLE) ist an sich bekannt. Es sind zu deren Durchführung verschiedene Geräte am Markt vorhanden, mit denen die so genannte beschleunigte Lösemittelextraktion zur Extraktion von festen und pastösen Proben vorgenommen werden kann. So ist ein bekannter Hersteller die amerikanische Firma Dionex, die in Deutschland unter Dionex GmbH firmiert und die u.a. die Extraktionsgeräte ASE 200 und ASE 300 sowie ASE 100 (ab Mai 2002) auf dem Markt hat (ASE® = Accelerated Solvent Extraction). Mit diesen Geräten können Lösemittel unterschiedlichster Polarität, einzeln oder im Gemisch, eingesetzt werden. Extraktionstemperaturen lassen sich im Bereich von Raumtemperatur bis zu 200 °C bei Drücken zwischen 3,5 (erforderlicher Anfangsdruck zum Betreiben des Gerätes) und 20 MPa einstellen, wobei der Druck lediglich die Funktion hat, das verwendete Lösemittel beim Extraktionsvorgang in flüssigem Zustand zu halten. Ein Probenkarussel bietet dabei die Möglichkeit, 24 vorbereitete Extraktionsvorgänge unmittelbar nacheinander über ein PC-Steuergerät durchzuführen. Bei dem Extraktionsgerät ASE 200 stehen für Extraktionsvorgänge Kartuschen aus Edelstahl von 1, 5, 11, 22 bis maximal 33 ml Inhalt zur Verfügung, bei den ASE 300 und ASE 100 Kartuschen bis maximal 100 ml.

Erfindungsgemäß erfolgte eine Anpassung der Operationsvariablen Lösemittel, Druck, Temperatur und Anzahl zeitabhängiger Extraktionsschritte an die Anforderungen einer Dialyse.

Gegenüber der bisher angewandten Dialysemethode werden mit dem erfindungsgemäßen Verfahren in wesentlich kürzeren Dialysezeiten vergleichbare Recovery-Werte erzielt, ohne dass die Qualität des Membranen-Passivsammlers (Beeinflussung der Porengröße oder Herauslösen von Inhaltsstoffen des Schlauches) beeinträchtigt wird.

In einer bevorzugten Ausführungsvariante der Erfindung ist die schadstoffbeladene Membran eine semipermeable Membran, in dem die Schadstoffe an einem Ab- oder Adsorptionsmittel akkumuliert vorliegen. Vorzugsweise handelt es sich um ein SPMD, der mindestens ein hydrophobes Ab- oder Adsorptionsmittel hoher Akkumulierungskapazität für mittel-bis schwerflüchtige organische Schadstoffe enthält. Ab- bzw. Adsorptionsmittel hoher Akkumulierungskapazität sind dem Fachmann bekannt. Es kann der bekannte (für lipophile Schadstoffe eingesetzte) flüssige Fettsäureester Triolein sein, aber auch feste organische Ab- oder Adsorptionsmittel wie z.B. Lichrolut® (Copolymer, Fa. Merck, Darmstadt, DE), XAD® (Adsorberharz, Fa. Serva, Heidelberg, DE), Tenax® (Polymer, Fa. Supelco, Taufkirchen, DE) Silikon und/oder Aktivkohle sowie ein mit diesen in der Hydrophobizität vergleichbares Material können in einem semipermeablen Passivsammler als Ab- bzw. Adsorptionsmittel enthalten sein.

Alternativ kann eine Membran aus Polyethylen geringer Dichte auch ein SPMD sein, in welchem Sediment, Boden, Altlasten, pflanzliche oder andere Matrices platziert werden, die insbesondere mit niedermolekularen Schadstoffen kontaminiert sind. Bevorzugt erfolgt diese Platzierung durch mechanisches Öffnen der Membran, Einfüllen des Materials und anschließendes Verschließen z.B. mittels Thermo-Schweißnaht. Erfindungsgemäß führt diese Variante zu einem verbesserten Cleanup von schadstoffbeladenen Materialien. Es werden von höhermolekularen matrixabhängigen Störsubstanzen befreite saubere Extrakte erhalten, die eine sensitivere Analyse als bisher ermöglichen. Ein Ab- bzw. Adsorptionsmittel wird nicht benötigt.

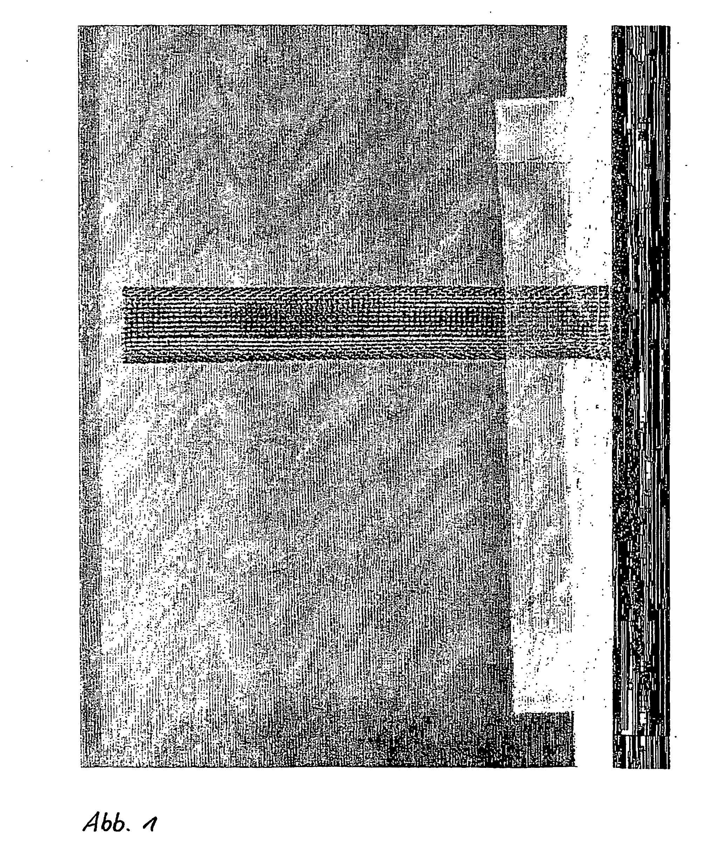

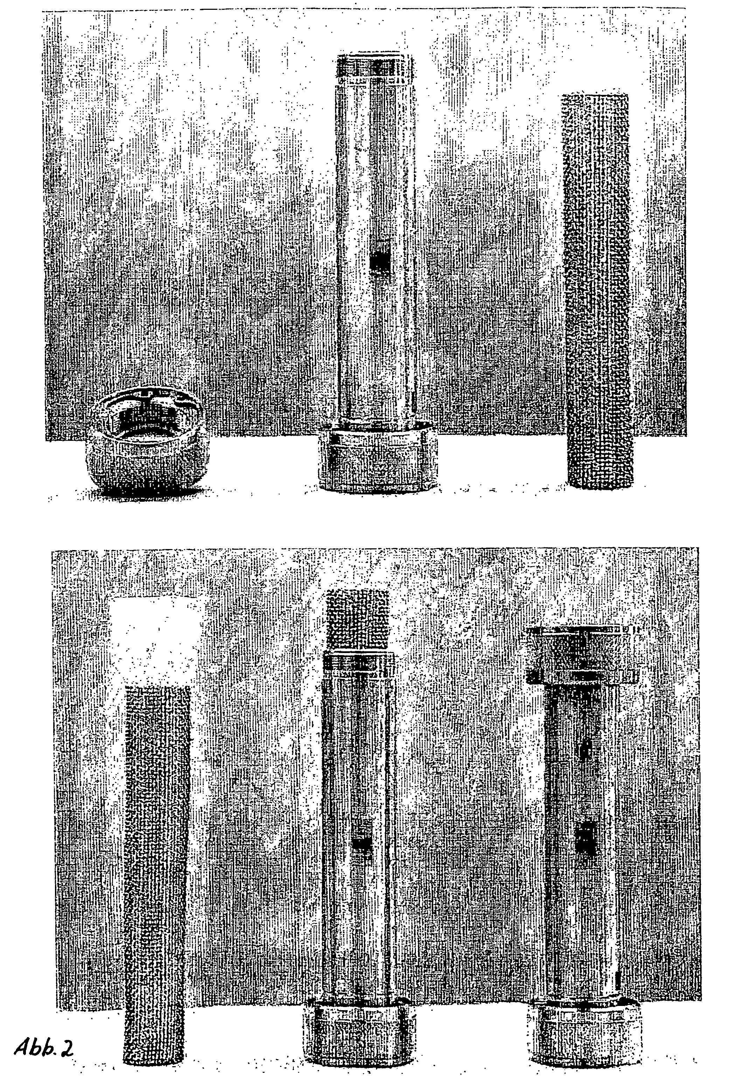

In einer bevorzugten Ausführung der Erfindung ist die verwendete netzartige Maske für die semipermeable Membran aus Metall oder Keramik, besonders bevorzugt ist sie aus Edelstahl. Die netzartige Maske in Form und Größe der Kartusche gewährleistet eine optimale und reproduzierbare Fixierung der Membran (vgl. Abb. 1, SPMD-Schlauch vor einer Metallmaske aus Edelstahl) ohne dass die Membran Kontakt zur inneren Wandung der Extraktionskartusche hat. In Abb. 2 sind von links nach rechts ein bevorzugtes Metallnetz mit der darin eingelegten Membran, das Einsetzen des Metallnetzes in die verwendete Kartusche und die für den Dialysevorgang mit Membran und Metallnetz wieder verschlossene Kartusche abgebildet. Das hierbei bevorzugt verwendete engmaschige Edelstahlnetz besteht aus einem 1 mm starken Edelstahl. Ein Umspülen der Membran mit dem Dialyselösemittel ist optimal gewährleistet.

Die verwendete PLE-Extraktionsapparatur wird für die dialytische Rückgewinnung in den Extraktionsparametern Druck, Temperatur, Lösungsmittel, sowie Anzahl und Dauer der statischen Extraktionsschritte so eingestellt, dass im Innern der Membran enthaltene lösliche höhermolekulare Substanzen (Molekulargewicht > 600 g/mol) gar nicht, ggf. nur zu einem sehr geringerem Anteil mitdialysiert werden (z.B. Triolein bis zu 5%). Die Dialyse wird bei einem Druck in der PLE-Apparatur durchgeführt, der höher als der atmosphärische Druck ist, bevorzugt wird der Druck auf ca. 3,5 MPa eingestellt.

Die Temperatur in der PLE-Apparatur ist den Haltbarkeitseigenschaften der semipermeablen Membran angepasst, besonders bevorzugt verläuft die Dialyse bei Raumtemperatur bis 50°C.

Bevorzugte Lösungsmittel sind unpolare organische Lösungsmittel oder ein Gemisch aus gut mischbaren unpolaren und polaren Lösungsmitteln, wie z.B. n-Hexan oder Toluen sowie Gemische aus Cyclohexan und Ethylacetat, Cyclohexan und Aceton, n-Hexan und Dichlormethan, n-Hexan und Dichlormethan und n-Hexan/ und Aceton eingesetzt werden. Als besonders vorteilhaft hat sich ein Lösungsmittelgemisch aus n-Hexan und Aceton im Verhältnis 90:10 bis 50:50 für die Dialyse von semipermeablen Passivsammlern erwiesen (vgl. Tab. 1). In der bevorzugten Variante des Einsatzes eines handelsüblichen SPMD mit Triolein wurde festgestellt, dass bei einem höheren polaren Anteil an Aceton im Gemisch (z.B. n-Hexan/Aceton 50:50) zwar die Dialyseeffizienz wieder abnimmt, sich gleichzeitig aber mit der Erhöhung des Aceton-Anteiles im Dialyseextrakt der Lipidgehalt an Triolein von 4,5% (10% Aceton) über 2,5% (30%) bis zu 0,8% (50%) verringert.

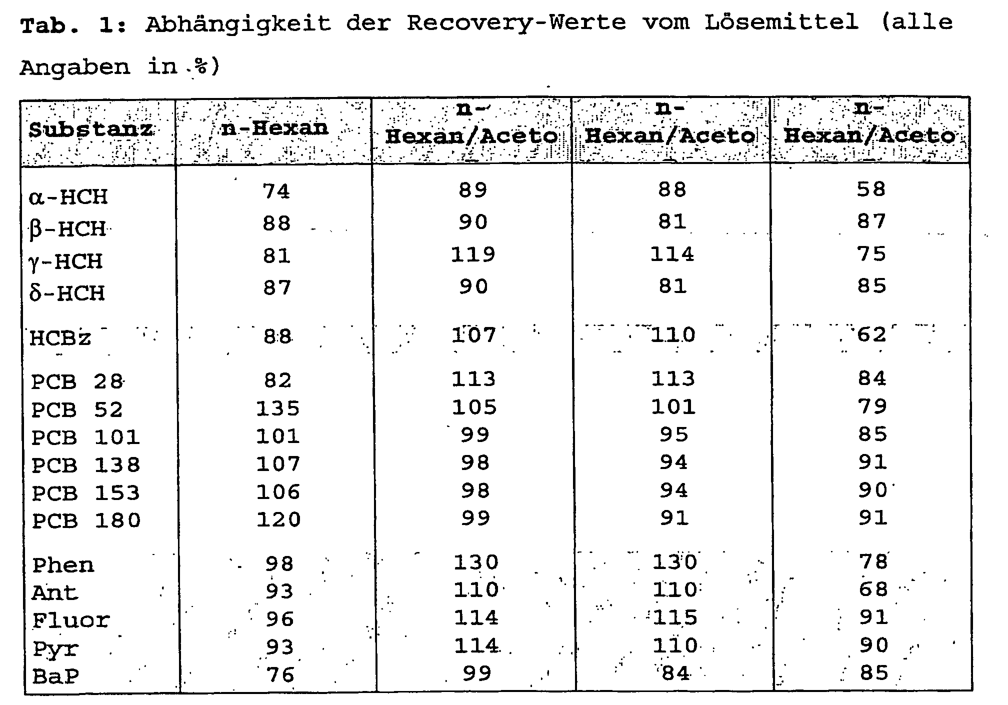

Sollte es für die Bestimmung ausgewählter Analyte bei ca. 4,5 % Lipidgehalt (n-Hexan/Aceton 90:10) zu Störungen der Analyse kommen, ist der Einsatz des Gemisches 70:30 mit einem Lipidgehalt von nur 2,5% zu bevorzugen.

Die Dialysezeit der statischen Dialyseschritte liegt wesentlich unter 24 Stunden, vorzugsweise unter 2 Stunden, in der Regel beträgt sie jedoch nur 4x10 Minuten.

In einer besonders bevorzugten Ausführungsvariante der Erfindung werden handelsübliche SPMDs bei einem Druck von 3,5 MPa, bei einer Temperatur von 50°C für 4x10 min mit einem Lösungsmittelgemisch aus n-Hexan und Aceton (90:10 vv) dialysiert.

Das Verfahren ist eine effektive und optimale Lösung für die dialytische Rückgewinnung von Schadstoffen aus unterschiedlichsten Matrices.

Das Verfahren nutzt die vielfältigen Variationsmöglichkeiten der Extraktionsparameter einer Pressurized Liquid Extraction (PLE) speziell für die dialytische Rückgewinnung von Schadstoffen aus integrativen semipermeablen Passivsammlern, vorzugsweise aus SPMDs.

Das erfindungsgemäße Verfahren besitzt zahlreiche Vorteile:

Das bisherige Dialyseverfahren wird vereinfacht, zeitlich deutlich verkürzt und fördert den routinemäßigen Einsatz von z.B. Passivsammlern, bevorzugt von SPMDs im terrestrischen und aquatischen Umweltbereich bzw. zur Arbeitsplatzüberwachung.

Zusammenfassend ist festzustellen, dass die Erfindung ein sogenanntes "Beschleunigtes Dialyse-Verfahren (ADP = Accelerated Dialyse Procedure) unter Anwendung einer Pressurized liquid extraction (PLE)-Apparatur darstellt, wobei die variablen Operationsparameter Druck, Temperatur, Lösemittel, Dialysezeit und Anzahl der Dialyseschritte optimiert wurden. Das Verfahren dient bevorzugt zum Nachweis von Spurenmengen an atmosphärisch transportierten organischen Schadstoffen, wie z.B. den unpolaren Organochlorverbindungen HCH-Isomere, DDT und seinen Metaboliten, PCBs und PAHs in semipermeablen Passivsammlern.

Im Ergebnis der vorgestellten Erfindung kommt es bei der Dialyse von handelsüblichen Passivsammlern zu einer erheblichen Verkürzung der Dialysezeiten (< 2 Stunden, bevorzugt 4 x 10 min anstelle von 48 h) bei deutlich geringerem Lösemittelverbrauch (120 ml anstelle von 520 ml). Das gelingt durch die Einbringung eines inerten Netzes zur Fixierung und mechanischen Stabilisierung der semipermeablen Membran in der Extraktionskartusche, wodurch die Membran während des Dialysiervorganges vom Lösemittel optimal umspült wird bei gleichzeitiger Kombination mit der dialysebezogenen Optimierung der Operationsvariablen. Ebenfalls lassen sich durch reine Veränderung der Polarität des Lösemittels durch die bevorzugte Verwendung des Gemisches n-Hexan/Aceton die Recovery-Werte für die Analyte innerhalb der Gruppe der HCH-Isomere deutlich verbessern, ohne daß die diesbezüglichen Recovery-Werte für die Analyte der anderen Schadstoffgruppen gemindert werden.

Mit der vorliegenden Erfindung ist es erstmalig möglich, ein speziell für die Extraktion von Schadstoffen aus Umweltmatrices und anderen Materialien konstruiertes modernes Extraktionsgerät für die Durchführung einer Dialyse einzusetzen.

Die Vorteile des Verfahrens liegen neben einer verbesserten methodischen Standardisierung in einer enormen zeitlichen Verkürzung im Vergleich zu dem bisherigen konventionellen Dialyse-Verfahren, einer deutlichen Senkung des Lösemittelverbrauchs und einer Einsparung an Materialkosten. Die Wiederfindungsraten entsprechen denen, die mit dem bisher angewandten konventionellen Dialyseverfahren erreicht wurden. Speziell für die Gruppe der HCHs konnte sogar eine deutliche Steigerung der Wiederfindungsrate von 80% auf 90% erreicht werden. Diese Verbesserungen ermöglichen den Routineeinsatz dieser Methode.

Darüber hinaus sind PLE-Apparaturen in Kombination mit dem erfindungsgemäßen dialytischen Verfahren auch für die Anwendung zur beschleunigten Dialyse für weitere Einsatzbereiche unter Verwendung von semipermeablen Membranen einsetzbar, wie z.B. zur Dialyse von Fremstoffen aus medizinischen, biochemischen, biologischen und technischen Verfahren.

### Ausführungsbeispiel

Die Durchführung des Dialyseverfahrens erfolgte unter folgenden Bedingungen in einer ASE-200-Extraktionsapparatur mit einem SPMD einer Länge von 10 cm:
- Einsatz des SPMD innerhalb eines Metallnetzes aus Edelstahl in eine 33 ml Extraktionskartusche
- Optimal eingestellter Druck: 3,5 MPa
- Optimal eingestellte Temperatur ohne Schadwirkung auf das SPMD-Material: 50°C
- Optimal wirkendes Dialyse-Lösemittelgemisch:

- n-Hexan/Aceton 90:10 bei maximal 4,5% Lipidgehalt (Triolein)
- Optimale Dialysezeiten für hohe Recovery-Werte: 4x10 min mit jeweils 30 ml frischem Lösungsmittel

Die Ergebnisse von 5-fach-Bestimmungen unter diesen optimierten Bedingungen sind in Tab. 2 aufgeführt. Dabei lagen die Mittelwerte der HCHs im Bereich von 88% für δ-HCH bis zu 100% für γ-HCH, von 106% für Hexachlorbenzol, um 100% für die PCBs und PAHs. Die RSD-Werte sind im Bereich zwischen 5,1 und 19,0% als akzeptabel anzusehen, zumal die Versuche in größeren zeitlichen Abständen unter Verwendung von gespiketen Schadstoffkonzentrationen durchgeführt wurden.

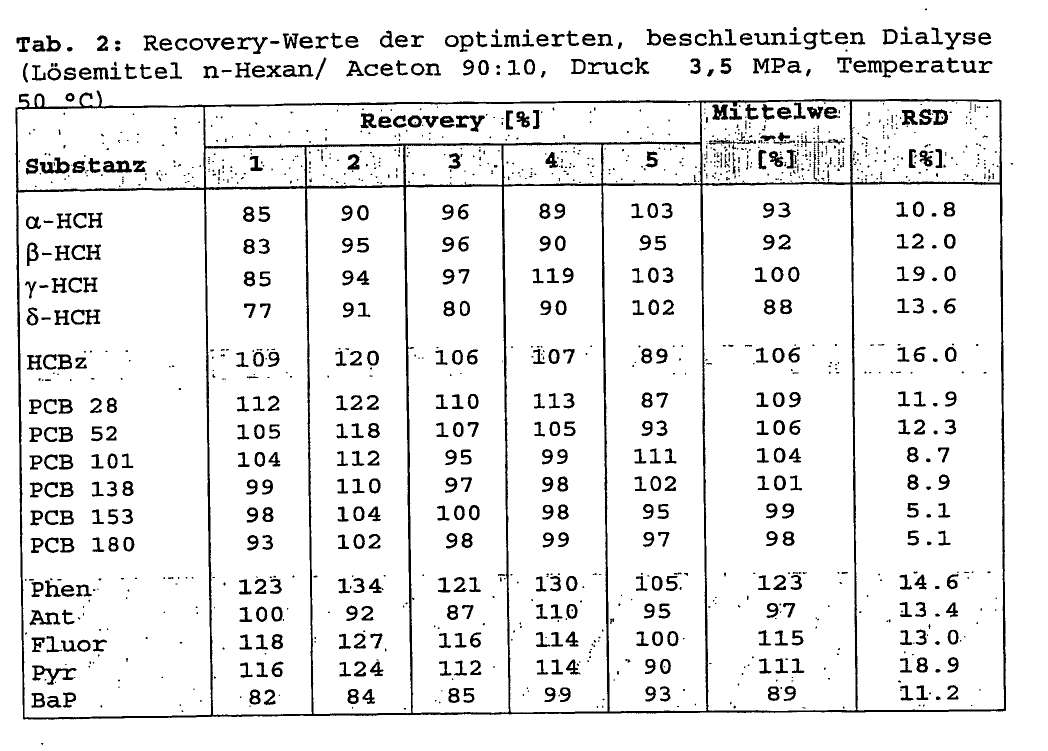

## Patentansprüche

1. Verfahren zur dialytischen Rückgewinnung von Fremdsubstanzen aus Passivsammlern, die aus semipermeablen Membranen unterschiedlicher Längen und Ausmaße bestehen,
**dadurch gekennzeichnet, dass**
unter Verwendung einer Druck-unterstützten Flüssig-Extraktionsapparatur (PLE) der mit Fremdsubstanzen beladene semipermeable Passivsammler in einer netzartigen Maske aus inerten Materialien innerhalb einer Extraktionskartusche fixiert und mit einem Lösungsmittel oder einem Lösungsmittelgemisch die Dialyse durchgeführt wird.

2. Verfahren nach Anspruch 1,
**dadurch gekennzeichnet, dass**
der Passivsammler schlauchförmig ist und mindestens ein hydrophobes Ab- oder Adsorptionsmittel hoher Akkumulierungskapazität für mittel- bis schwerflüchtige organische Schadstoffe enthält.

3. Verfahren nach Anspruch 2,
**dadurch gekennzeichnet, dass**
das Ab-/Adsorptionsmittel hoher Akkumulierungskapazität Triolein, Lichrolut, XAD, Tenax, Silikon und/oder Aktivkohle ist.

4. Verfahren nach einem der Ansprüche 1 bis 3,
**dadurch gekennzeichnet, dass**
die netzartige Maske aus Metall oder Keramik besteht.

5. Verfahren nach einem der Ansprüche 1 bis 4,
**dadurch gekennzeichnet, dass**
die Dialyse bei einem Druck in der PLE-Apparatur durchgeführt wird, der höher als der atmosphärische Druck ist, vorzugsweise 3,5 MPa.

6. Verfahren nach einem der Ansprüche 1 bis 5,
**dadurch gekennzeichnet, dass**
die Temperatur maximal 60°C beträgt, vorzugsweise Raumtemperatur (20°C) bis 50°C.

7. Verfahren nach einem der Ansprüche 1 bis 6,
**dadurch gekennzeichnet, dass**
als Lösemittel n-Hexan oder Toluen sowie Gemische aus Cyclohexan und Ethylacetat, Cyclohexan und Aceton, n-Hexan und Methylenchlorid, n-Hexan und Dichlormethan sowie n-Hexan und Aceton eingesetzt werden.

8. Verfahren nach Anspruch 7,
**dadurch gekennzeichnet, dass**
für die Dialyse mittel- bis schwerflüchtiger organischer Schadstoffe ein Lösungsmittelgemisch aus n-Hexan und Aceton im Verhältnis zwischen 90:10 bis zu 50:50 eingesetzt wird.

9. Verfahren nach einem der Ansprüche 1 bis 8,
**dadurch gekennzeichnet, dass**
mittel- bis schwerflüchtige Organika mindestens 4 x 10 Minuten dialysiert werden.

10. Verwendung des Verfahrens nach einem der Ansprüche 1 bis 9 zur Dialyse von Schadstoffen aus der Umweltüberwachung und aus medizinischen, biochemischen sowie biologischen Bereichen.

11. Verwendung des Verfahrens nach einem der Ansprüche 1 bis 9 zur Dialyse von Sediment, Boden, Altlasten oder pflanzlichen Matrices, welche bevorzugt niedermolekulare Schadstoffe enthalten, wobei diese in den semipermeablen Passivsammlern platziert sind.

## Claims

1. A method for the dialytic recovery of foreign substances from passive samplers consisting of semipermeable membranes of varying lengths and dimensions,
**characterized in that**
using a pressurized liquid extraction apparatus (PLE), the semipermeable passive sampler loaded with foreign substances is fixed in a mesh-like mask of inert materials inside an extraction cartridge, and dialysis is carried out using a solvent or a mixture of solvents.

2. The method according to claim 1,
**characterized in that**
the passive sampler is tubular in shape and includes at least one hydrophobic absorbent or adsorbent having high accumulative capacity for medium- to low-volatility organic pollutants.

3. The method according to claim 2,
**characterized in that**
said absorbent/adsorbent of high accumulative capacity is triolein, Lichrolut, XAD, Tenax, silicone and/or active charcoal.

4. The method according to any of claims 1 to 3,
**characterized in that**
said mesh-like mask is made of metal or ceramics.

5. The method according to any of claims 1 to 4,
**characterized in that**
the dialysis is performed in the PLE apparatus at a pressure higher than atmospheric pressure, preferably at 3.5 MPa.

6. The method according to any of claims 1 to 5,
**characterized in that**
the temperature is 60°C at maximum and preferably from room temperature (20°C) to 50°C.

7. The method according to any of claims 1 to 6,
**characterized in that**
n-hexane or toluene, as well as mixtures of cyclohexane and ethyl acetate, cyclohexane and acetone, n-hexane and methylene chloride, n-hexane and dichloromethane, as well as n-hexane and acetone are used as solvents.

8. The method according to claim 7,
**characterized in that**
a mixture of solvents comprising n-hexane and acetone at a ratio of between 90:10 and 50:50 is used in the dialysis of medium- to low-volatility organic pollutants.

9. The method according to any of claims 1 to 8,
**characterized in that**
medium- to low-volatility organics are dialyzed for at least 4 x 10 minutes.

10. Use of the method according to any of claims 1 to 9 in the dialysis of pollutants from environmental surveillance and from medical, biochemical and biological sectors.

11. Use of the method according to any of claims 1 to 9 in the dialysis of sediment, soil, older waste deposits or vegetable matrices preferably including low-molecular weight pollutants, these being placed in said semipermeable passive samplers.

## Revendications

1. Procédé de récupération dialytique de substances étrangères à partir de collecteurs passifs qui sont constitués de membranes semi-perméables de différentes longueurs et dimensions,
**caractérisé en ce**
**qu'**en utilisant un appareil d'extraction liquide sous pression (PLE), on fixe le collecteur passif semi-perméable chargé de substances étrangères dans un masque réticulaire constitué de matériaux inertes à l'intérieur d'une cartouche d'extraction et qu'on effectue la dialyse avec un solvant ou un mélange de solvants.

2. Procédé selon la revendication 1,
**caractérisé en ce que**
le collecteur passif a une forme tubulaire et contient au moins un agent absorbant ou adsorbant hydrophobe offrant une haute capacité d'accumulation pour les substances nocives organiques moyennement volatiles ou peu volatiles.

3. Procédé selon la revendication 2,
**caractérisé en ce que**
l'agent absorbant ou adsorbant à haute capacité d'accumulation est de la trioléine,-du Lichrolut, du XAD, du Tenax, du silicone et/ou du charbon actif.

4. Procédé selon une des revendications 1 à 3,
**caractérisé en ce que**
le masque réticulaire est constitué de métal ou de céramique.

5. Procédé selon une des revendications 1 à 4,
**caractérisé en ce**
**qu'**on réalise la dialyse à une pression dans l'appareil d'extraction qui est supérieure à la pression atmosphérique, de préférence à une pression de 3,5 MPa.

6. Procédé selon une des revendications 1 à 5,
**caractérisé en ce que**
la température est au maximum de 60°C, et de préférence comprise entre la température ambiante (20°C) et 50°C.

7. Procédé selon une des revendications 1 à 6,
**caractérisé en ce**
**qu'**en tant que solvant, on utilise du n-hexane ou du toluène ainsi que des mélanges de cyclohexane et d'acétate d'éthyle, de cyclohexane et d'acétone, de n-hexane et de chlorure de méthylène, de n-hexane et de dichlorométhane ou de n-hexane et d'acétone.

8. Procédé selon la revendication 7,
**caractérisé en ce que**,
pour la dialyse des substances nocives organiques moyennement volatiles ou peu volatiles, on utilise un mélange de solvants composé de n-hexane et d'acétone dans un rapport compris entre 90 : 10 et 50 : 50.

9. Procédé selon une des revendications 1 à 8,
**caractérisé en ce**
**qu'**on dialyse les substances organiques moyennement volatiles à peu volatiles au moins pendant 4 fois 10 minutes.

10. Utilisation du procédé selon une des revendications 1 à 9 pour la dialyse des substances nocives issues de la surveillance de l'environnement et des secteurs médicaux, biochimiques et biologiques.

11. Utilisation du procédé selon une des revendications 1 à 9 pour la dialyse des sédiments, des sols, des charges anciennes ou des matrices végétales qui contiennent des substances nocives de préférence à bas poids moléculaire, moyennant quoi ceux-ci sont insérés dans les collecteurs passifs semi-perméables.
